# EUROPÄISCHE PATENTANMELDUNG

(11) **EP 0 736 372 A1**
(43) Veröffentlichungstag der Anmeldung: **09.10.1996**
(21) Anmeldenummer: 96104981.4
(22) Anmeldetag: 29.03.1996
(51) Int. Cl.: B32B 5/18, C08J 9/36

(54) **Polymeres Verbundsystem**

(30) Priorität: 07.04.1995 DE 19513171
(71) Anmelder: Röhm GmbH, 64293 Darmstadt (DE)
(72) Erfinder: Ittmann, Günther, 64823 Gross-Umstadt (DE); Krieg, Manfred, Dr., 64289 Darmstadt (DE)

(57) **Zusammenfassung**

Die Erfindung betrifft ein Verfahren zur Herstellung eines polymeren Verbundsystems, bestehend aus einer Grundschicht aus einem Hartschaumstoff und mindestens einer darauf fest haftenden Außenschicht aus Polymethylmethacrylat, wobei man auf der als Grundschicht dienenden vorgefertigten Hartschaumstoffplatte unter den Bedingungen der Kammerpolymerisation die die Außenschicht bildende Polymervorstufe zusammen mit Hilfsstoffen in gewünschter Schichtdicke aufbringt und radikalisch polymerisiert oder daß man auf die als Grundschicht dienende Hartschaumstoffplatte die aus Polymethylmethacrylat bestehende Außenschicht durch Laminieren aufbringt.

## Beschreibung

### Gebiet der Erfindung

Die Erfindung betrifft ein Verfahren zur Herstellung polymerer Verbundsysteme aufgebaut aus mindestens einer Deckschicht bestehend aus Poly(methyl)methacrylat, das einen hohen Füllstoffgehalt besitzen kann und damit verbunden einer Grundschicht aus einem polymeren Schaumwerkstoff.

### Stand der Technik

Verbundwerkstoffe mit einer Kunststoff-Deckschicht und einer damit verbundenen Schicht aus einem polymeren Schaumwerkstoff sind in verschiedenen Ausführungsarten vorgeschlagen worden.

So beschreibt die DE-A 20 00 159 Sanitärartikel aus einem Schichtwerkstoff, dessen Kern aus einem geschäumten Thermoplasten, speziell aus ABS-Schaum und dessen Außenschicht aus nicht-geschäumtem Polymethylmethacrylat (PMMA) besteht. Die Herstellung erfolgt durch Spritzgießen.

Aus der DE-A 27 57 489 sind für den Leichtbau geeignete Schichtstoffplatten bekannt, bestehend aus einer Hartschaum-Kernplatte, insbesondere auf Basis von Polyurethan oder Polymethacrylimid, die allseits mit einer Deckschicht aus einem (durch anionische Polymerisation von Laurinlactam gewonnenen) Gußpolyamid umgossen wurde.

In der EP 0 239 877 wird die Herstellung von Verbundstrukturen mit einer Polyurethaninnenschicht in kompakter oder teilexpandierter Form und Außenschichten aus schlagfestem Polymethylmethacrylat (PMMA) beschrieben. Die Polyurethanbildung wird wie üblich aus Polyisocyanaten und Polyolen in Kontakt mit der PMMA-Schicht in einer Form vorgenommen. Zur Umsetzung und Strukturbildung wird die PMMA-Schicht auf 40 - 70 °C erhitzt und Vakuum angelegt.

Die EP 0 000 440 beschreibt Artikel mit Polymethylmethacrylat-Oberflächen, bei denen als eine Alternative ein aus einem Thermoplasten bestehendes, vorgeformtes Verstärkungselement als Gießform verwendet, das (vorpolymerisierte) Monomer darauf aufgebracht und zum Fertigprodukt auspolymerisiert wird. Dabei kann im Verstärkungselement ein Strukturschaum enthalten sein.

Aus der JP-OS 60 159 046 (Chem. Abstr. 104, 6891d) sind flammgeschützte dekorative Acrylat-Laminate bekannt. Dabei wird ein Methylmethacrylat-Praepolymerisat mit 30 - 80 Gew.-% an anorganischem Füllstoff auf ein steifes, zelluläres PVC aufpolymerisiert.

Die DE-OS 20 61 946 beschreibt Verbundelemente mit einem Schaumstoffkern, wobei man auf eine Schicht eines Polymethacrylimidschaumstoffs eine im thermoplastischen Zustand befindliche Kunststoffschicht, vorzugsweise PMMA mittels einer Walze aufbringt. Dadurch entsteht auch ohne Klebereinsatz ein dauerhafter Verbund. Die Kunststoffdeckschicht wird vorzugsweise unmittelbar vor dem Auftragen durch Extrusion erzeugt. Verbundmaterialien mit einem Polymethacrylimidschaumstoff als Kern und Epoxidharz als Hüllschicht haben auch Eingang in die Praxis gefunden, z.B. in der Flugzeugindustrie.

In der DDR-PS 458 732 werden Formkörper mit niedrigem Raumgewicht und hoher Festigkeit vorgeschlagen. Diese weisen einen Kern aus hartem PMMA-Schaum oder einem Mischpolymerisat auf, der mindestens teilweise oder vollständig mit einer Schicht aus dem gleichen Kunststoff überzogen ist und Kern und Deckschicht durch anpolymerisiertes Acrylharz materialgleich miteinander verbunden sind.

In der DE-OS 29 27 122 wird ein zweistufiges Verfahren zur Herstellung von Schichtwerkstoffen aus Hartschaumstoff und faserverstärktem Kunststoff beansprucht. Dabei wird der faserverstärkte Kunststoff als sogenannte "Prepregs" im Verbund mit dem Schaumstoff in Stufen unter Pressdruck gehärtet.

Die DE-OS 33 04 882 beschreibt einen Verbundkörper mit einem Kern aus Polymethacrylimidschaumstoff und einer Deckschicht aus einem ggfs. faserverstärkten duroplastischen Kunststoff. Diese werden hergestellt, indem man auf den Schaumstoffkern den duroplastischen Kunststoff auflegt und den Verbund in einer Hohlform erhitzt, wobei der Schaumstoffkern einen Schäumdruck von wenigstens 1 bar entwickelt und die Deckschicht unter Aufpressen durch den Schäumdruck an die Hohlform mit dem Schaumstoffkern verbunden und ausgehärtet wird.

### Aufgabe und Lösung

Die Technik läßt vielfältige Einsatzmöglichkeiten für polymere Verbundwerkstoffe erkennen, wobei allerdings Kriterien im Vordergrund stehen, die von den bereits vorhandenen Werkstoffen nicht oder nicht voll befriedigend erfüllt werden können. Derartige Kriterien sind z. B. eine hohe Steifigkeit, hohe Temperaturbelastbarkeit, möglichst Flammfestigkeit, Beständigkeit gegen Umwelteinflüsse und gegen direkte chemische Einwirkungen neben den unabdingbaren Voraussetzungen wie stabilen Verbunden auf der Materialseite und günstigen Fertigungsmöglichkeiten auf der Herstellungsseite.

Es wurde nun gefunden, daß die erfindungsgemäßen Verbundsysteme die Anforderungen der Technik in hohem Maße erfüllen. Die vorliegende Erfindung betrifft somit ein Verfahren zur Herstellung polymerer Verbundsysteme, bestehend aus einer Grundschicht aus einem Hart-Schaumstoff und mindestens einer fest haftenden Außenschicht AS aus Polymethylmethacrylat, wobei der Verbund dadurch hergestellt wird, daß man auf eine als Grundschicht vorgesehene, vorgefertigte Hartschaumstoffplatte STP unter den Bedingungen der Kammerpolymerisation die die Außenschicht bildende Polymervorstufe zusammen mit Hilfsstoffen und gegebenenfalls partikelförmigen Füllstoffen FS in gewünschter Schichtdicke aufbringt und radikalisch polymerisiert oder daß man auf die als Grundschicht vorgesehene Hartschaumstoffplatte STP die aus Polymethylmethacrylat bestehende Außenschicht AS durch Laminieren aufbringt.

Vorteilhaft liegt die Dicke der Außen(PMMA)Schicht bei ca. 1 - 6 mm, die Hartschaumschicht bei ca. 5 - 30 mm. Gegebenenfalls kann sich zwischen der Außen- und der Hartschaumschicht noch eine Kleberschicht, beispielsweise eine Polymerisations-Kleberschicht befinden. Die Außenschicht kann einseitig oder beidseitig auf die Schaumstoffplatte aufgebracht werden.

In einer besonders vorteilhaften Ausführungsform enthält das die Außenschicht AS bildende Polymethylmethacrylat PM partikelförmiges anorganisches Füllmaterial in Mengen von 5 - 80 Gew.-%, vorzugsweise 20 - 80, insbesondere 40 - 60 Gew.-% bezogen auf die Außenschicht AS.

Bei der Herstellung und Handhabung der die Außenschicht AS bildenden Materialien kann vorteilhaft von den Erfahrungen des Standes der Technik ausgegangen werden.

Im einfachsten Falle kann analog dem Verfahren einer Kammerpolymerisation vorgegangen werden (vgl. Houben-Weyl, Methoden der Organischen Chemie, 4. Aufl., Bd. E20, pg. 1144 - 1149, G. Thieme 1987). Dabei wird die eine Kammerwand der Polymerisationskammer durch eine die spätere Kernschicht bildende Schaumstoffplatte STP ersetzt. Die andere Kammerwand kann z. B. aus einem ggfls. beschichteten Metallblech bestehen, das beispielsweise bündig auf einer üblicherweise verwendeten Silikatglasscheibe aufliegt. Als Abstandshalter kommen an sich übliche Dichtungs(=Distanz)-Schnüre infrage. Die Dichtungsschnur, als Anhalt sei eine Dicke von ca. 3 mm angegeben, wird dabei zweckmäßig in gewissem Abstand vom Rand, z. B. der Kammerwand, genannt sei ca. 1 cm Abstand, entlang den Rändern der z. B. aus einem (beschichteten) Metallblech gebildeten Kammerwand so angebracht, daß nach dem Aufsetzen der Schaumsstoffplatte STP eine auf der einen Stirnseite mit Öffnung versehene Kammer entsteht. Für die flächenmäßige Begrenzung der Kammern gelten nur die aus dem herkömmlichen Kammerverfahren resultierenden Limitierungen. Es lassen sich beispielsweise Platten mit der Längenabmessung bis zu 4 000 mm und einer Breite bis zu 2 500 mm herstellen.

Vorzugsweise ist das als Kammerwand einzusetzende Metallblech mit einer fluorhaltigen Kunststoffbeschichtung (z.B. Teflon®) versehen.

In der einfachsten Form verwendet man zur Herstellung der Außenschicht AS, die ganz oder zu mindestens 50 Gew.-%, vorzugsweise mindestens 80 Gew.-% (bezogen auf den Polymergehalt) aus Methylmethacrylat aufgebaut ist, eine an sich übliche flüssige Polymervorstufe bestehend aus den Monomeren und einem Polymeranteil, dem Praepolymerisat MP, von 1 - 20 Gew.-% bezogen auf die gesamte flüssige Polymervorstufe. Die vorliegende Erfindung kann sich dabei an den Stand der Technik anschließen (z. B. DE-PS 24 49 656, EP-PS 0 214 551 oder EP-PS 0 218 866), wobei die flüssigen Polymervorstufen eine Viskosität von weniger als 5 Pa·s, vorzugsweise von weniger als 0,5 Pa·s bei der zur Handhabung vorgesehenen Temperatur aufweisen.

Als Praepolymerisat MP kommen z. B. die einschlägig verwendeten PMMA-Polymerisate infrage, die gegebenenfalls untergeordnete Anteile bis etwa 15 Gew.-% an zweckmäßig ausgewählten Comonomeren, wie z. B. Methylacrylat enthalten.

Die Praepolymerisate haben üblicherweise eine Molmasse im Bereich 2 x 10⁴ bis 8 x 10⁵ Dalton [Bestimmung durch Size Exclusion Chromatography (SEC)]. Zur Bestimmung der Molekulargewichte vgl. H. F. Mark et al., Encyclopedia of Polymer Science & Technology, 2nd Ed., Vol. 10, pg. 1 - 18, J. Wiley 1989.

Die Monomeren M der Vorstufe zur Außenschicht AS bestehen zu mindestens 50 und bis zu 100 Gew.-% aus Methylmethacrylat, daneben weiteren einschlägig als Comonomeren verwendeten Alkylestern oder Arylestern der (Meth)acrylsäure mit gewöhnlich 1 - 8 Kohlenstoffatomen, wie beispielsweise Ethyl(meth)acrylat, Propyl(meth)acrylat, Butyl(meth)acrylat, bzw. Isomere, 2-Ethylhexyl(meth)acrylat, Cyclohexyl(meth)acrylat, Phenyl(meth)acrylat, Benzyl(meth)acrylat.

Ferner können die Polymervorstufen noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Seite 184, Springer-Verlag, 1967), wobei exemplarisch Ethylenglykoldimethacrylat, 1,4-Butandioldimethacrylat, Triglykoldimethacrylat, Trimethylolpropantrimethacrylat und -acrylat, Allylverbindungen wie Allylmethacrylat oder Triallylcyanurat genannt seien.
Der Gehalt an vernetzenden Monomeren liegt im allgemeinen bei 0,1 bis 1,5 Gew.-%, bezogen auf die Monomeren. Außer den Monomeren enthält die Polymervorstufe vorzugsweise ein Praepolymerisat MP in Anteilen von 1 bis 20 Gew.-% bezogen auf die Polymervorstufe.

Als Füllstoffe FS eignen sich die einschlägig für Gießharze verwendeten, feinteiligen anorganischen oder organischen Materialien. Zweckmäßig wird eine Korngröße von 200 µm Durchmesser, vorzugsweise 50 µm nicht überschritten. Bei Anwendung von Cristobalit als Filler sollen vorzugsweise mindestens 95 % der Teilchen < 10 µm groß sein. Teilchen mit einer Größe von ≦ 0,1 µm sollen nach Möglichkeit nicht mehr als 10 % der gesamten Teilchenzahl ausmachen.

Die Teilchengröße wird gemäß den üblichen Verfahren bestimmt (vgl. B. Scarlett in "Filtration & Separation" pg. 215, 1965). Zur Teilchengrößenbestimmung werden die jeweils größten Abmessungen der Partikel herangezogen. Bevorzugt werden kornförmige Partikel. Gelegentlich kann es vorteilhaft sein, die Partikel durch Erhitzen, etwa auf 150 °C, von adsorptiv gebundener Feuchtigkeit zu befreien. Die Füllstoffe FS können Naturprodukte oder synthetisch hergestellt sein. Dabei kann die Einstellung eines elastischen Schermoduls von wenigstens 5 GNm⁻² vorteilhaft sein. Geeignet sind z. B. Mineralien wie Aluminiumoxide, insbesondere in hydratisierter Form wie Aluminiumhydroxide und Derivate, z. B. Erdalkalidoppeloxide und Erdalkalihydroxide, Tone, Siliciumdioxid in seinen verschiedenen Modifikationen, Silikate, Aluminosilikate, Carbonate, Phosphate, Sulfate, Sulfide, Oxide, Kohle, Metalle und Metallegierungen.

Ferner sind synthetische Materialien wie Glasmehl, Keramik, Prozellan, Schlacke, feinverteiltes synthetisches SiO₂ geeignet. Genannt seien Kieselsäuremodifikationen wie Quarz (Quarzmehl), Tridymit und Cristobalit, sowie Kaolin, Talcum, Glimmer, Feldspat, Apatit, Baryte, Gips, Kreide, Kalkstein, Dolomit. Gegebenenfalls können auch Gemische von Füllstoffen angewendet werden. Der Füllstoffanteil in den Außenschichten z.B. in den Gießharzen beträgt vorzugsweise mindestens 40 Gew.-%. Im allgemeinen wird ein Anteil von 80 Gew.-% nicht überschritten. Als Richtwert sei ein Füllstoffgehalt der Gießharze von > 50 und bis 80 Gew.-% angegeben. Die Herstellung der Füllstoffe in den zweckmäßigen Korngrößen kann nach den bekannten Verfahren erfolgen, z. B. durch Brechen und Mahlen. Besonders bevorzugt ist Cristobalit neben Aluminiumhydroxid.

Bei einer bevorzugten Ausführungsart liegt die durchschnittliche Teilchengröße im Bereich 60 - 0,5 µm. Vorzugsweise liegt die Härte (nach Mohs: vgl. Römpp's Chemie-Lexikon, 9. Auflage, S. 1700, Georg Thieme Verlag 1990) der Füllstoffe FS im Falle des Cristobalits bei ≧ 6, im Falle des Aluminiumhydroxids bei 2,5 - 3,5. Die Silanisierungsmittel SI-M dienen in an sich bekannter Weise als Haftvermittler zwischen Füllstoff und organischer Phase. Es können somit die aus dem Stand der Technik bekannten Organosilicium-Verbindungen eingesetzt werden [vgl. D. Skudelny Kunststoffe 77, 1153 - 1156 (1987); Kunststoffe 68 (1978); Firmenschrift Dynasilan ^{R}, Haftvermittler der Dynamit Nobel, Chemie].

In erster Linie handelt es sich um funktionelle Organosiliciumverbindungen mit mindestens einer ethylenisch ungesättigten Gruppe im Molekül. Der die ethylenisch ungesättigte Gruppe tragende funktionelle Rest ist im allgemeinen über ein C-Atom mit dem zentralen Siliciumatom verknüpft. Die verbleibenden Liganden am Silicium sind in der Regel Alkoxyreste mit 1 bis 6 Kohlenstoffatomen (wobei sich noch Etherbrücken im Alkylrest befinden können). Genannt seien z. B. die Vinyltrialkoxysilane. Die CC-Doppelbindung kann auch über ein oder mehrere Kohlenstoffatome mit dem Si-Atom verbunden sein, z. B. in Form der Allyltrialkoxysilane oder der Methacryloyloxypropyltrialkoxysilane.
Auch Dialkoxysilane können verwendet werden, wobei am Si-Atom ein weiterer funktioneller Rest mit einer CC-Doppelbindung, meist des gleichen Typs, oder ein Alkylrest mit vorzugsweise 1 bis 6 Kohlenstoffatomen gebunden ist. Es können auch verschiedene Typen von Organosiliciumverbindungen in der Organosilicium-Komponente vorhanden sein. Genannt seien z.B. das Vinyltrimethoxysilan, Vinyltriethoxysilan, Vinyltris(methoxyethoxy)silan, Divinyldimethoxysilan, Vinylmethyldimethoxysilan, Vinyltrichlorsilan, - Methacryloyloxypropyltrimethoxysilan oder - Methacryloyloxypropyltris(methoxyethoxy)-silan.
Vorteilhafterweise werden die Organosiliciumverbindungen zusammen mit Katalysatoren vom Amintyp, insbesondere vom Typ der Alkylamine, mit 3 bis 6 Kohlenstoffatomen, speziell mit n-Butylamin angewendet. Als Richtwert für die Anwendung des Amin-Katalysators kann 0,05 bis 10 Gew.-%, vorzugsweise 1 bis 5 Gew.-% der Organosiliciumkomponente angenommen werden.

Im allgemeinen beträgt das Gewichtsverhältnis anorganischer Füllstoffe zu Organosiliciumverbindung 500 : 1 bis 20 : 1, vorzugsweise 50 ± 25 : 1.

Die erfindungsgemäßen polymeren Verbundsysteme werden in Plattenform gewonnen, wobei der flächenmäßig limitierende Faktor die Kammerpolymerisation darstellt. Die Grundfläche liegt dadurch in der Regel innerhalb der Abmessungen 4 000 x 2 500 mm. Die Höhe der Hartschaumschicht wird zweckmäßig dem technologischen Ziel angepaßt. Im allgemeinen liegt sie im Bereich 5 bis 30 mm. gewöhnlich im Bereich 1 bis 6 mm.

Als Hartschaumschicht kommen insbesondere Kunststoffschäume auf Basis von Polymethylmethacrylat (PMMA), Polymethacrylimid (PMI), desweiteren Polyvinylchlorid (PVC), Acrylnitril-Butadien-Styrolcopolymere (ABS), Polycarbonat (PC) infrage, d. h. geschäumten Kunststoffen, auf denen Polymethylmethacrylat ausreichend haftet [vgl. J.E. Johnsen in Kunststoffberater 10,, 538 - 541, (1976)].

Besonders gut ist die Haftung auf unter sich kompatiblen Polymeren wie PMMA, PMI, PVC.

Gegebenenfalls bringt man, sofern die gegenseitige Haftung von Natur aus nicht ausreicht, eine Haftungsvermittelnde Schicht auf, beispielsweise auf Basis von Copolymerisaten der in Frage stehenden Monomeren oder in Form von Haftklebeschichten.

Dieser Fall kann z.B. eintreten bei Hartschaumschichten auf Basis von Polyolefinen, Celluloseacetat, Epoxiharzen, Polystyrol, Phenol-, Melamin- und Harnstoff-Harzen, Polyamid, Polyimid, Polyphenylenoxid, Polysulfon, Polyurethan u.a. Erfindungsgemäß anwendbare Hartschäume sind z.B. in H.F. Mark et al., Encyclopedia of Polymer Science & Engineering Vol. 3, 1 - 49, J. Wiley 1985; Ullmanns Encyclopedia of Industrial Chemistry, 5th Ed., Vol. A11, 435 - 464, VCH 1988 oder DE-A 42 07 057 beschrieben.

Die Herstellung von PMI-Schaumplatten kann z. B. aus Ullmann's Encyclopedia Vol. A11, loc.cit., pg. 456, aus der DE-A 29 27 122 bzw. US-A 43 16 934, DE-A 29 29 165, PMMA-Schaumplatten aus EP 068 439 oder DE-A 43 13 715 entnommen werden. In bestimmten Fällen empfiehlt sich die Verwendung von vernetztem Hartschaummaterial. Es können sowohl Hartschaumplatten aus offenporigem als auch geschlossenporigem Schaum eingesetzt werden. Die Bestimmung des Gehalts geschieht nach ASTM D 2856. Die Zellenabmessungen der meisten Kunststoffschäume liegen in der Größenordnung 0,05 - 1 mm, bei extrudiertem Polyethylen und PMMA sind die Porengrößen gewöhnlich > 1 mm.

Die als Grundschicht dienende Hartschaumschicht kann selbst einen Gehalt an üblichen partikelförmigen Füllstoffen FS, beispielsweise im Bereich 5 - 70 Gew.-% besitzen.

Ein günstiges Verfahren zur Herstellung der Hartschaumschichten ist das Extrusionsverfahren, dort wo Extrusionsschäumen möglich ist, z. B. für Polystyrol. Die Prüfverfahren für die mechanischen Eigenschaften der Hartschäume sind ebenfalls Ullmann's Encyclopedia loc.cit. Vol. A11, pg. 453 - 461 zu entnehmen. Die Hartschäume lassen sich in der Regel gut mechanisch bearbeiten z. B. sägen, fräsen, bohren usw.

Die erfindungsgemäßen Verbundsysteme lassen sich vorteilhaft auch so herstellen, daß man auf die als Grundschicht dienende Hartschaumstoffplatte die aus Polymethylmethacrylat bestehende Außenschicht durch Laminieren aufbringt.

Die Herstellung von Laminaten (Schichtpress-Stoffen) kann in unmittelbarer Anlehnung an den Stand der Technik vorgenommen werden. (Vgl. Kunststoff-Handbuch Vol. 1, Hrsg. B. Carlowitz S. 321 - 22, Carl Hanser Verlag 1990).

Während als Grundschicht dienende Hartschaumstoffplatten STP wie oben beschrieben eingesetzt werden können, benötigt man für die Laminiertechnik in der Regel vorgefertigte PMMA-Platten wie sie z. T. im Markt als Halbzeug angeboten werden, wobei diese nach dem Gußverfahren oder per Extrusion gefertigt sein können.

Von besonderem Interesse ist wiederum die Ausführungsart der PMMA-Platten, bei der das PMMA einen Gehalt von ca. 5 - 80 Gew.-% an sich bekannten partikelförmigen Füllstoffen FS aufweist.

Die Herstellung der vorgefertigten PMMA-Platten kann wiederum in Analogie zu dem vorstehend beschriebenen in-situ-Kammerpolymerisationsverfahren vorgenommen werden. (Vgl. auch Houben-Weyl, Methoden der Organischen Chemie, 4. Aufl. Bd. E20, pg. 1144 - 1149, G. Thieme 1987). Man bedient sich vorteilhaft der o. g. Praepolymerisate MP und der Monomeren M sowie gegebenenfalls der Füllstoffe FS.

Die Kammern für das Gießverfahen können in klassischer Weise aus Silikat-Glas oder aus Mittelplatten mit hoher Oberflächengüte, z. B. aus (verchromten) hochglanzpolierten Metallplatten (Dicke etwa 4 mm) gebildet werden. Die Stärke der Glasplatten (Tafelgläser mit polierter Oberfläche) richtet sich nach der Größe der Platten und beträgt im Minimum etwa 5 mm. Bei Anwendung geschlossener Kammern werden die an sich üblichen abstandhaltenden Dichtungsschnüre eingesetzt, beispielsweise Rundschnüre aus PVC, wobei die Abstände so bemessen sind, daß Platten der zu fordernden Dicke, beispielsweise im Bereich 6 - 10 mm gebildet werden. Für die flächenmäßigen Dimensionen ist bei der Gießtechnologie neben der praktischen Handhabbarkeit vorwiegend die Geometrie der Polymerisationskammern maßgeblich, wobei Längen von über 3 m bei ca. der halben Breite ohne weiteres realisierbar sind.

Kleinere Abmessungen lassen sich in an sich bekannter Weise, z. B. durch Sägen erhalten. Als praxisnahe Abmessungen seien beispielsweise 1,5 m x 3,20 m genannt. Die Kammern können horizontal oder - bei geschlossenen Kammern - auch vertikal angeordnet sind. Es kann auch auf Polymerisatbahnen, Schichtstoffbahnen, Glasfaser, Gewebebahnen u. ä. aufpolymerisiert werden.

Eine weitere Alternative zu Herstellung der PMMA-Platten stellt das Gießverfahren auf einer Doppelbandanlage dar, (vgl. EP-B 292 738; DE-A 28 01 221) wobei auch mehrschichtige Platten herstellbar sind.

Eine weitere mögliche Ausführungsart ist die kontinuierliche Plattenherstellung auf einem Förderband. Dabei wird die mit einem geeigneten Polymerisationsinitiator versetzte Gießharz-Suspension auf ein laufendes Förderband mit seitlichen Begrenzungen aufgebracht, wobei sie sich aufgrund ihrer niedrigen Viskosität und ihrer geringen Strukturviskosität schnell verteilt und nivelliert. Danach wird die Oberfläche der Suspension mit einem zweiten Metallband abgedeckt. Die Härtung der Suspension kann thermisch entweder durch Heizen der beiden Metallbänder erfolgen oder bei Verwendung geeigneter Redox-Initiatoren auch ohne Fremdheizung durchgeführt werden.

Das Fügen der als Grundschicht dienenden Hartschaumstoffplatten STP und einer bzw. zwei Außenschichten aus ggfls. hochgefülltem PMMA kann in an sich bekannter Weise erfolgen, z. B. mittels einer haftungsvermittelnden Schicht, insbesondere durch Verkleben. Dafür sind z. B. Polymerisationskleber auf Methylmethacrylatbasis (z. B. das Produkt ACRIFIX® 190 der Röhm GmbH) gut geeignet.

Für die erfindungsgemäßen Verbundwerkstoffe eröffnen sich zahlreiche Anwendungsgebiete.
Genannt sei z. B. der Einsatz als Lärmschutzwände ggfls. mit Sichtfenstern. Dabei ist die Steifigkeit, die Möglichkeit variabler Einfärbung und die Splittersicherheit hervorzuheben. Gegenüber Massivplatten läßt sich die Dichte herabsetzen und innerhalb gewisser Grenzen variieren, wobei keine Einbußen hinsichtlich Steifigkeit und Festigkeit hingenommen werden müssen.

Hervorzuheben ist die Eignung als Wandverkleidung, wobei die genannten vorteilhaften Eigenschaften und insbesondere das Brandverhalten zum Tragen kommen. Einsatzmöglichkeiten eröffnen sich insbesondere auch als Leichtbauelemente im Innen- und Außenbereich z. B. für Trennwände, Flachdachabdeckungen, Raumauskleidungen, Türelemente, Möbel bzw. Möbelteile u. ä. Gedacht kann ferner werden an Abschirmung gegen bestimmte Wellenarten, wie z. B. Radar neben dem Einsatz als Schallschutz, als Gehäuse für Phono-und Fernsehgeräte, Telefone, in der Datenverarbeitung, für Telefonzellen usw.

### Vorteilhafte Wirkungen

Die erfindungsgemäßen Verbundwerkstoffe zeichnen sich durch eine günstige Dichte, hohe Steifigkeit, hohe Temperaturbelastbarkeit insbesondere in den hochgefüllten Varianten aus. Ferner weisen die hochgefüllten Varianten eine gesteigerte Flammfestigkeit auf. Die Dichte läßt sich innerhalb bestimmter Grenzen variieren.

Eine bevorzugte Ausführungsform mit Polymethacrylimid-Schaum zeichnet sich auch durch hohe Lösungsmittelbeständigkeit aus. Weiter ist auch der feste Verbund hervorzuheben.

### BEISPIELE

### Beispiel 1

### Herstellung einer hochgefüllten Suspension mit Al(OH)₃ als Füllstoff

In 285,97 g MMA und 0,03 g 2,4-Dimethyl-6-tert-butylphenol werden 40 g PMMA-Praepolymerisat (n_{spez/c} = 130 - 140, M_{w} ca. 400 000) (Plexigum® M920) bei ca. 40 °C innerhalb 5 Stunden gelöst und danach auf Zimmertemperatur abgekühlt. In diesem Sirup werden 5,0 g Stearinsäure und 3,0 g Glykoldimethacrylat gelöst. Am Dissolver werden unter mäßigem Rühren 5 g Aerosil® 200, 1 g TiO₂ RN® 56 (Weißpigment der Fa. Kronos), 330,0 g Aluminiumhydroxid mit einer mittleren Teilchengröße von 45 µm (ALCOA® C33, Produkt der Fa. ALCOA, USA) und danach 330,0 g Aluminiumhydroxid mit einer mittleren Teilchengröße von 8 µm (ALCOA® C333) in den Sirup eingetragen. Danach wird die Suspension mit dem Dissolver (Typ Dispermat CV, Fa. Getzmann, BRD) mit 20,0 m/sec. ca. 10 Minuten dispergiert.
Nach Abkühlen auf Raumtemperatur werden in der Suspension am Flügelrührer 6 g Bis-(4-tert-butylcyclohexyl)-peroxidicarbonat gelöst und die eingeschlossenen Luftbläschen unter Anlegen eines Vakuums innerhalb sehr kurzer Zeit aus der Suspension entfernt.

### Beispiel 2

### Herstellung einer hochgefüllten Suspension mit Cristobalit als Füllstoff

102,8 g Methylmethacrylat wird mit 2 g Ethylenglykoldimethacrylat und 8 g γ-Methacryloyloxypropyltrimethoxysilan unter Zusatz von 0,2 g n-Butylamin homogen vermischt.

Zu diesem Gemisch werden 280 g Cristobalit (Cristobalit T 6000, Korngröße 0,1 - 10 µm, Produkt der Fa. Quarzwerke, Köln) und 1 g TiO₂ RN 56® (Weißpigment der Fa. Kronos) portionsweise mit Hilfe eines Dissolvers (Typ Dispermat CV, Fa. VMA Getzmann, BRD) so eingetragen, daß die Viskosität des Gemisches 10 Pa·s nicht übersteigt. Die Dauer des Eintragens liegt bei ca. 1 Stunde, wobei in Intervallen zwischendurch, speziell gegen Ende, die Reaktion ohne Rühren ablaufen gelassen wird.

Der Ansatz wird nun 24 Stunden auf der Rollbank behandelt, dann setzt man 6 g eines Copolymerisats aus Methylmethacrylat und Methylacrylat (90 : 10 Gew.-Teile) mit einem η_{spez/c}-Wert von 110 (Produkt PLEX® 8640 der Röhm GmbH) zu. Danach wird der Ansatz nochmals ca. 48 Stunden auf der Rollbank in einem rollbankfähigen Gefäß behandelt. Danach werden der Suspension 1 g Bis-(4-tert-Butylcyclohexyl)-peroxidicarbonat und 1 g tert-Butylperpivalat gelöst und die eingeschlossenen Luftbläschen unter Anlegen eines Vakuums innerhalb sehr kurzer Zeit aus der Suspension entfernt.

### Beispiel 3

### Herstellung einer hochgefüllten Suspension mit AL(OH)₃ als Füllstoff

In 296,99 g MMA und 0,03 g 2,4-Dimethyl-6-tert-butylphenol werden 40 g PMMA-Praepolymerisat (η_{spez/c} = 130 - 140, M_{w} ca. 400 000) (Plexigum® M920) bei ca. 40 °C innerhalb 5 Stunden gelöst und danach auf Zimmertemperatur abgekühlt. In diesem Sirup werden 5,0 g Stearinsäure und 3,0 g Glykoldimethacrylat gelöst. Am Dissolver werden unter mäßigem Rühren 5 g Aerosil® 200, 330,0 g Aluminiumhydroxid mit einer mittleren Teilchengröße von 45 µm (ALCOA® C33, Produkt der Fa. ALCOA, USA) und danach 330,0 g Aluminiumhydroxid mit einer mittleren Teilchengröße von 8 µm (ALCOA® C333) in den Sirup eingetragen. Danach wird die Suspension mit dem Dissolver (Typ Dispermat CV der Fa. Getzmann, BRD) mit 20,0 m/sec. ca. 10 Minuten dispergiert.

Nach Abkühlen auf Raumtemperatur werden in der Suspension am Flügelrührer 1 g Bis-(4-tert-butylcyclohexyl)peroxidicarbonat und 1 g tert.Butylperpivalat gelöst und die eingeschlossenen Luftbläschen unter Anlegen eines Vakuums innerhalb sehr kurzer Zeit aus der Suspension entfernt.

### Beispiel 4

Herstellung einer hochgefüllten Suspension mit AL(OH)₃ als Füllstoff.
In 266,97 Methylmethacrylat (MMA) und 0,03 g 2,4-Dimethyl-6-tert.butylphenol werden 60 g eines MMA-Polymerisats (η_{spez/c} = 130 - 140, M_{w} ca. 40 000, Produkt PLEXIGUM® M920 der Fa. Röhm GmbH) bei ca. 50 °C innerhalb 5 Stunden gelöst und danach auf Raumtemperatur abgekühlt. In dem so erhaltenen Sirup werden 5,0 g Stearinsäure und 3,0 g Glykoldimethacrylat gelöst.

Am Dissolver (Produkt Dispermat® der Fa. VMA Getzmann/BRD) werden unter mäßigem Rühren 332,5 g Aluminiumhydroxid mit einer mittleren Teilchengröße von 45 µm (Produkt ALCOA® C33 der Fa. ALCOA/USA) und danach 332,5 g Aluminiumhydroxid mit einer mittleren Teilchengröße von 8 µm (Produkt ALCOA® C333) in den Sirup eingetragen. Anschließend wird die Suspension mit dem Dissolver mit 12,5 m/s ca. 10 Minuten dispergiert.

### Beispiel 5

### Herstellung von hochgefülltem PMMA-Plattenmaterial

Aus zwei Silikatglasscheiben (Dicke 6 mm) wird mit Hilfe einer runden PVC-Schnur (Durchmesser 3,2 mm) eine Kammer mit den Abmessungen 210 mm x 300 mm gebaut. In den Zwischenraum der Silikatglas-kammer wird die Suspension gemäß Beispiel 1 eingegossen und die Kammer verschlossen. Die gefüllte Kammer wird waagrecht in ein Wasserbad von 65 °C eingelegt. Die Polymerisationszeit beträgt 20 Minuten. Anschließend wird in einem Trockenschrank 30 Minuten bei 105 °C endpolymerisiert. Danach wird die Kammer entformt und der ausgehärtete Gießling entnommen. Der Plattengießling hat beidseitig hochglänzende Oberflächen und ist nicht durchgebogen.

### Beispiel 6

### Herstellung einer beidseitig beschichten Hartschaumstoffplatte durch Kammerpolymerisation

### Herstellung der Kammer 1

### Kammergröße: 210 x 300 mm

Auf eine 6 mm dicke Silikatglasscheibe wird ein teflon-beschichtetes Metallblech gelegt, wobei die Teflonseite die Kammerwand bildet. Die Distanzierschnur (3,2 mm) läuft im Abstand von ca. 1 cm vom Rand des Teflonbleches rund um das Teflonblech. Auf die Distanzierschnur wird als zweite Kammerwand die Polyimid-Schaumstoffplatte [ROHACELL®-Platte (Typ 110 WF) der Fa. Röhm GmbH] aufgelegt. Im Kontaktbereich mit der Distanzierschnur wird auf die ROHACELL®-Platte ein Tesastreifen von 1 cm Breite aufgeklebt. Die ROHACELL®-Platte wird mit einer 6 mm dicken Silikatglasscheibe abgedeckt.
Im vorliegenden Beispiel hatte die Packung eine Dicke von 45 mm.

### Füllen der Kammer:

Der distanzierte Zwischenraum der Packung wurde mit einem Ansatz analog Beispiel 2 gefüllt und verschlossen.

### Polymerisation:

Die Polymerisation wurde in einem Wasserbad von 65 °C innerhalb 40 Minuten durchgeführt, wobei die Kammer waagrecht liegt und die ROHACELL®-Seite nach oben zeigt. Danach wurde die Kammer entformt. Man erhält eine einseitig beschichtete ROHACELL®-Platte.

### Herstellung der Kammer 2:

Aus der noch nicht beschichteten ROHACELL®-Seite wird, wie bei der Herstellung der Kammer 1 beschrieben, eine zweite Kammer gebaut und mit dem unter Beispiel 3 beschriebenen Ansatz gefüllt, polymerisiert und entformt. Man erhält eine beidseitig beschichtete ROHACELL®-Platte.

### Beispiel 7

### Herstellung eines hochgefüllten Polymethylmethacrylatschaums

Zu 100 Gew.-Teilen der Suspension aus Beispiel 4 werden ein Gew.-Teil Dibenzoylperoxid (50 %ig in Di-n-Butylphthalat, Produkt INTEROX® BP-50-FT der Fa. Peroxid Chemie GmbH) und 0,5 Gew.-Teile Azo-bis-isobutyronitril (Produkt INTEROX® NN IBN) zugefügt und gelöst. Unter Rühren werden anschließend 10 Gew.-Teile CO₂-Schnee zur Suspension zugesetzt. Nach einer Rührzeit von 5 Minuten wird die Temperatur der Suspension gemessen. Sie beträgt -5 °C. Dann wird unter Rühren der Suspension 1 Gew.-Teil N,N-Dimethyl-p-toluidin als 50 %ige Lösung in MMA zugesetzt. Nach einminütiger Rührzeit wird der Rührer entfernt. Von dieser Mischung wird in einer nach oben offenen Form mit den Abmessungen 200 x 300 mm, bestehend aus einer Glasplatte mit einem 40 mm hohen Rand, der mittels eines 40 mm hohen PVC Streifen mit einer Dicke von 3 mm gebildet wird, so viel eingefüllt, daß die Füllhöhe ca. 1 cm beträgt.
Durch das im Ansatz enthaltende Redoxsystem startet die Polymerisation unmittelbar nach dem Einfüllen. Nach Ende der exothermen Reaktion erhält man einen vorwiegend geschlossenporigen Schaum der Dichte 0,66 g/cm³.

### Beispiel 8

### Herstellung eines Laminats

Die hochgefüllte PMMA-Platte aus Beispiel 5 und die hochgefüllte Schaumplatte aus Beispiel 7 werden flächig mit dem Polymerisationsklebstoff ACRIFIX® 190 miteinander verklebt. Zu diesem Zweck wird ACRIFIX® 190 mit 3 - 5 Gew.-% Katalysator 20® verrührt, bis keine Schlieren mehr sichtbar sind. Luftblasen steigen im abgedeckten Gefäß an die Oberfläche des Klebstoffs oder lassen sich im Vakuum-Exsikkator (minimal 200 mbar) entfernen.

Die so vorbereitete Klebstoffmischung wird direkt auf die Platte gemäß Beispiel 5 aufgegossen. Dann wird die Platte aus Beispiel 7 vorsichtig aufgelegt. Überschüssiger Klebstoff tritt an den Kanten aus. Nach ca. 2 Stunden ist der Klebstoff ausgehärtet.

## Patentansprüche

1. Verfahren zur Herstellung eines polymeren Verbundsystems, bestehend aus einer Grundschicht aus einem Hartschaumstoff und mindestens einer darauf fest haftenden Außenschicht aus Polymethylmethacrylat,
dadurch gekennzeichnet,
daß man auf der als Grundschicht dienenden vorgefertigten Hartschaumstoffplatte unter den Bedingungen der Kammerpolymerisation die die Außenschicht bildende Polymervorstufe zusammen mit Hilfsstoffen in gewünschter Schichtdicke aufbringt und radikalisch polymerisiert oder daß man auf die als Grundschicht dienende Hartschaumstoffplatte die aus Polymethylmethacrylat bestehende Außenschicht durch Laminieren aufbringt.

2. Verfahren gemäß Anspruch 1, dadurch gekennzeichnet, daß die die Außenschicht bildende Polymervorstufe noch partikelförmige Füllstoffe in 5 - 80 Gew.-% bezogen auf die Polymervorstufe enthält.

3. Verfahren gemäß den Ansprüchen 1 und 2, dadurch gekennzeichnet, daß der partikelförmige Füllstoff aus Aluminiumoxid oder hydratisierten Modifikationen desselben besteht.
